# EUROPEAN PATENT SPECIFICATION

(11) **EP 1 490 305 B1**
(45) Date of publication and mention of the grant of the patent: **27.07.2011**
(21) Application number: 03729916.1
(22) Date of filing: 06.03.2003
(51) Int. Cl.: C02F 11/02, C02F 11/16, A01C 3/02, B01F 3/04, C05F 17/02

(54) **PLANT AND METHOD FOR THE DISPOSAL OF ZOOTECHNICAL SEWAGE**
ANLAGE UND VERFAHREN ZUR ABWASSERENTSORGUNG AUS DER TIERZUCHT
INSTALLATION ET PROCEDE PERMETTANT D'ELIMINER LES EFFLUENTS ZOOTECHNIQUES

(30) Priority: 08.03.2002 IT BO20020122
(43) Date of publication of application: 29.12.2004
(73) Proprietor: Candiracci Luigi & C. S.N.C., 61044 Cantiano (PU) (IT)
(72) Inventor: CANDIRACCI, Luigi, 61044 Cantiano (PU) (IT); CANDIRACCI, Francesco, 61044 Pontedazzo di Cantiano (PU) (IT)
(74) Representative: Negrini, Elena
(86) International application number: PCT/EP2003/002294
(87) International publication number: WO 2003/076349

(56) References cited:
- EP-A- 0 250 617
- EP-A- 0 445 102
- WO-A-02/18534

## Description

### Field of the Invention

The present invention relates to the technical field of plants intended for the disposal of organic sewage and, in particular, this invention relates to a plant and a method fer the disposal of liquid zoo technical sewage deriving, e. g. , from the faeces and urine of swine and similar animals.

### Background Art

The disposal of sewage that is produced at swine or other animals' farms is presently carried out by means of cleaners wherein the liquid mass, discharged into basins or containers of appropriate sizes, is relentlessly stirred to eliminate ammoniac and other volatile polluting substances. Later, the solid components are separated from the liquid ones in order to use said solid components as manure. The residual liquid components are scattered all over the ground, which must feature suitable crops and an adequate surface area.

Disposal methods are also known to include sewage accumulation in stocking lakes from which this material is later drawn and scattered all over the ground during allowed periods.

The main disadvantage of this equipment and these known procedures is that wide ground extents are needed on which the liquid sewage component is to be scattered. These grounds must be grown with suitable crops, be located far from watercourses or water beds that could be polluted by the said sewage as well as from residential centres on account of the exhaled stench. Another drawback is ground saturation within short periods, which causes the ground to be made unable to bear and absorb organic liquids any more.

Sewage disposal is also carried out through the adoption of animal sheds fitted with an outwards slanting floor with straw-covered litters. In this case the outwards-draining sewage is collected with a scraper and reused.

The main drawback with this method is that it requires rarely available particular sheds with draining floors and the straw used, that gets dirty without maturing, cannot be used as manure and is to be disposed of, this involving difficult and expensive disposal procedures.

Another drawback with the above-described equipment and methods is that they generate miasmas and bad, particularly nasty smells.

WO 02/18534 A2 discloses an apparatus for treating livestock wastes and foodstuff wastes according to the preamble of claim 1. The document essentially concerns solid waste, more particularly the extraction of foreign materials from said waste.

### Objects and Summary of the Invention

The main object of this invention is to propose a plant and a method for the disposal of zoo technical sewage, in particular coming from bred swine, and therefore dispensing with dangerous and expensive lakes or ample sewage collecting basins and extended ground plots with adequate characteristics.

Another object is to propose a plant and a method allowing sewage treatment without the use of additional chemical matters capable of turning the sewage into a mixed, stable and natural conditioning compound ready for use in the fertilisation of agricultural crops and free of nasty smells.

Still another object is to propose a plant and a method offering a high cost-effective efficiency and performance.

This is obtained by a plant having the features disclosed in claim 1 and a method having the steps disclosed in claim 14.

### Brief description of the Drawings

The features of the present invention which are believed to be novel are set forth with particularity in the appended claims.

The invention, together with further objects and advantage thereof, may be understood with reference to the following description, taken in conjunction with the accompanying drawings, and in which:
- figure 1 shows a schematic plan view of the plant for the treatment of organic sewage, the subject of this invention;
- figure 2 shows an enlarged, partial and sectional plan view of elements of the plant as shown in figure 1;
- figure 3 shows a sectional front view of the elements as shown in figure 2;
- figure 4 shows a sectional side view of the elements as shown in figure 2;
- figure 5 shows an enlarged side view of the stirring shown in figure 1 therein some parts have been removed in order to better emphasize other parts;
- figure 6 shows a front view of the stirring means as shown in figure 5;
- figure 7 shows a plan view of the stirring means as shown in figure 5;
- figures 8 and 9 are front and plan views, respectively, of a plant featuring several basins, and
- figure 10 shows a plan view, to an enlarged scale, of the bridge crane translation means among the different basins in the plant as shown in figures 8 and 9.

### Brief description of a preferred embodiment of the Invention

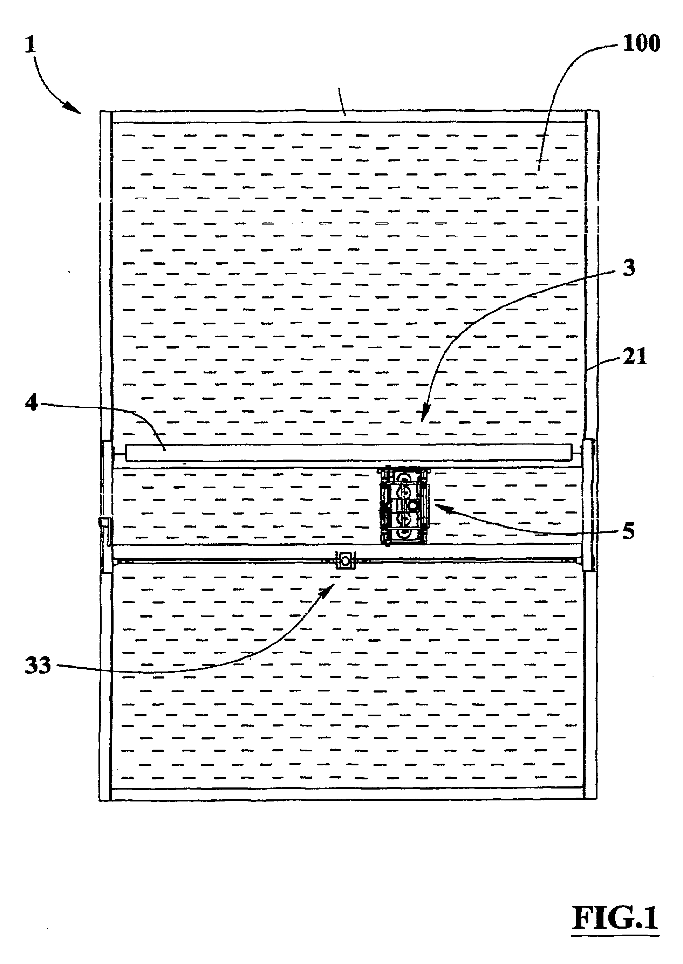

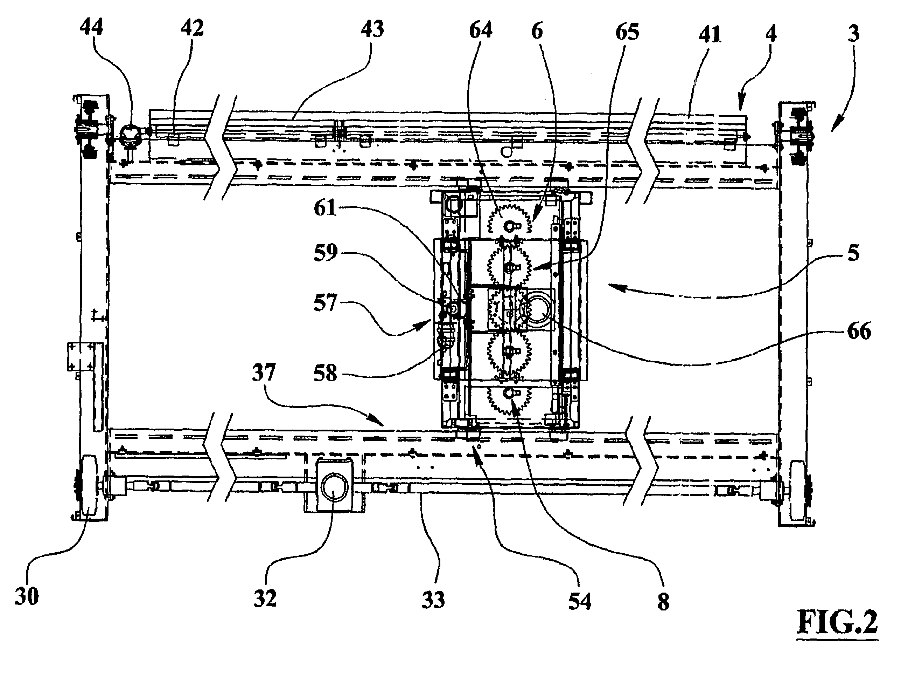

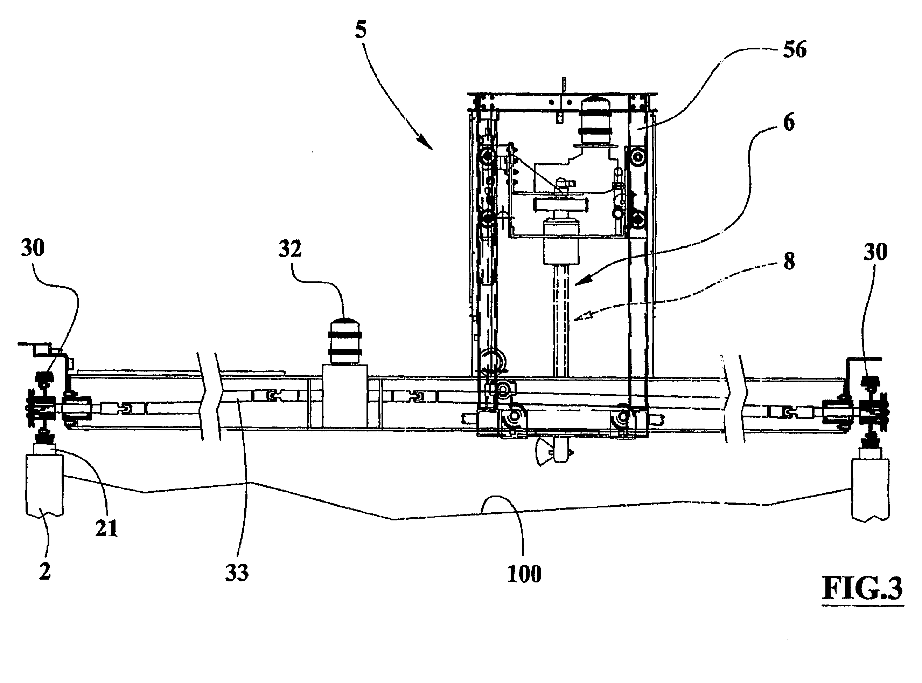

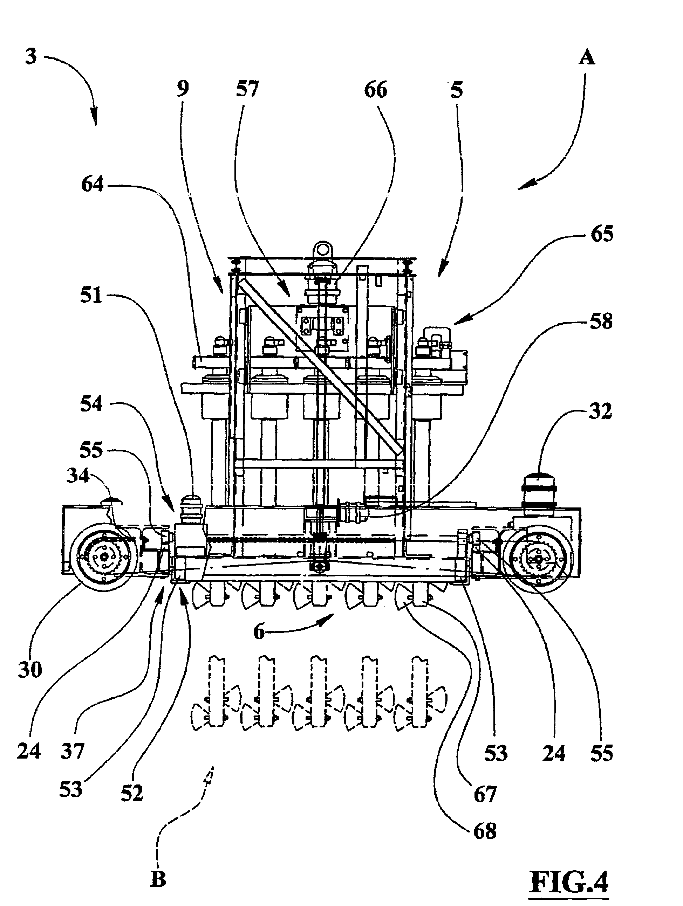

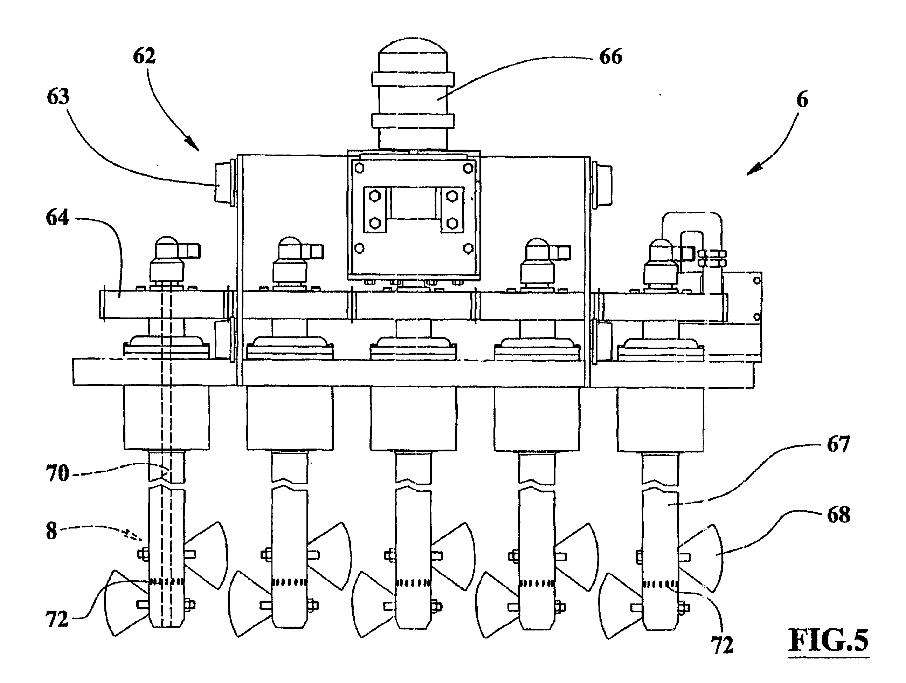

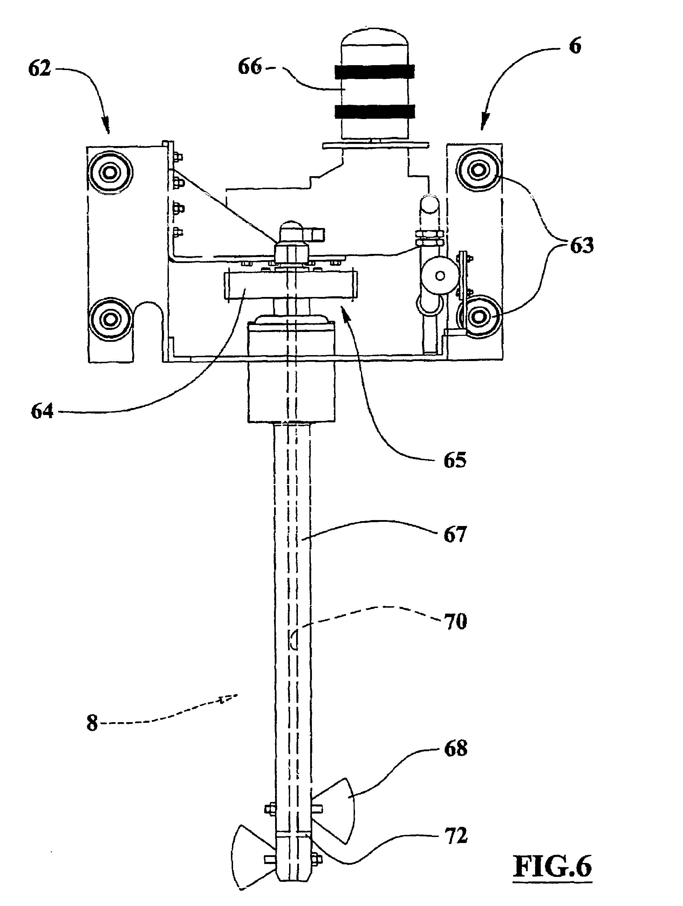

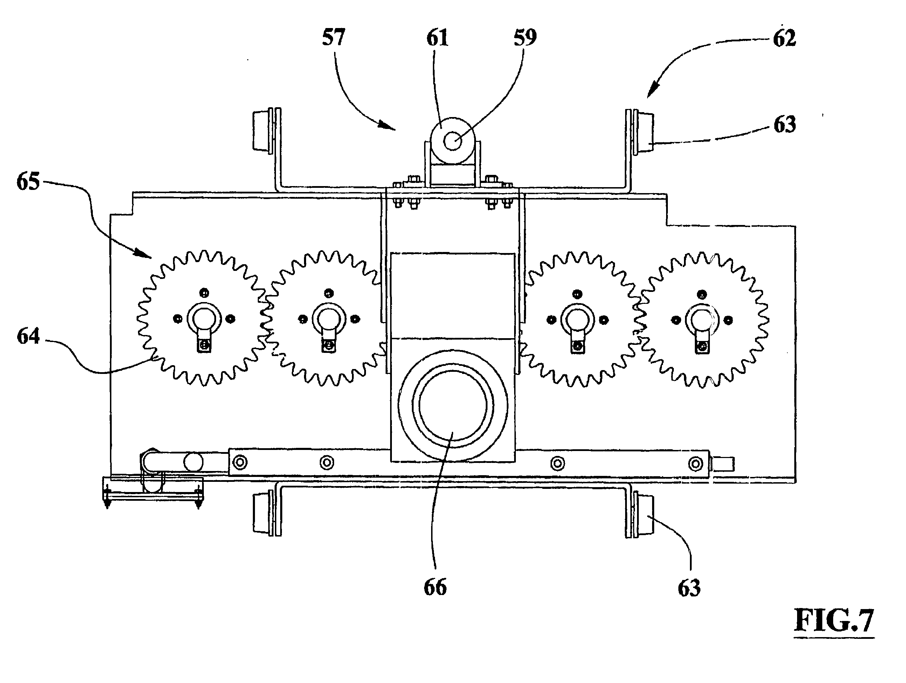

With reference to figures 1 through 7, 1 denotes the plant for the treatment of zoo technical sewage, which is the subject of this invention. The plant is basically made up of a basin 2 intended to accommodate the sewage and one or more materials of vegetable origin in a shattered form, either accompanied or not by materials of organic origin, stirring means 6 and aerating means 8 associated to the basin 2.

The plant included a bridge crane 3 translating on first guide means 21 of basin 2 and is fitted with sewage inlet means 4 into basin 2.

The first guide means 21 consist of a couple of rails, each of which is fastened to its related longitudinal edge of basin 2 to support a multitude of wheels 30 of bridge crane 3, two of these wheels being driven, through the first transmission means 33, by the first actuator means 32 fastened to bridge crane 3. It is also possible to adopt an integral drive for bridge crane 3, for instance through the use of a drive chain system 34 transmitting the motion of the wheels driven by the first actuator means to the remaining wheels.

Sewage inlet means 4 consist of a dispenser 41, featuring a lengthened shape and fastened on a cross edge of bridge crane 3 and internally fitted with stirring means 42 to stir the sewage and discharge it through a lengthwise opening 43 in the above-mentioned dispenser 41. This dispenser 41 is about as long as the width of bridge crane 3, and stirring means 42 consist of an axle fitted with several fins, driven by third actuator means 44.

The plant includes a trolley equipment 5 , slidably supported by second guide means 37 of bridge crane equipment 3, and slidably supports stirring means 6 and aerating means 8.

Trolley equipment 5 includes first translation means 52, slidably coupled with second guide means 37 of bridge crane equipment 3 and third transmission means 54 for operating trolley equipment 5 with respect to bridge crane 3.

First translation means 52 include a multitude of idle wheels 53 of trolley equipment 5 that match the rails of second guide means 37.

Third transmission devices 54 include a couple of pinions 55 driven by second actuator means 51 connected to their related rack means 24 of bridge crane 3.

Stirring means 6 and aerating means 8 are fastened to saddle means 9 that are translated by fourth transmission means 57 through fourth actuator means 58 of trolley equipment 5 between a lifted condition A and a lowered condition B, wherein stirring means 7 and aerator means 8 are lifted and lowered, respectively, with respect to basin 2.

Fourth transmission means 57 consist of a worm screw 59 which is started rotating by the fourth actuator means 58 and is connected to a related nut screw 61 fastened to saddle means 9.

The latter include second translation means 62 fitted with a multitude of idle rolls 63 that are engaged into corresponding rails of third guide means 56 of trolley equipment 5.

Stirring means 6 consist of five shafts 67, each of which is fitted with a multitude of blades 68 and is set rotating around its own axis by fifth actuator means 66 through fourth transmission means 65 of saddle means 9. Blades 68 are preferably arranged heiicaiiy along their own related shaft 67.

Fourth transmission means 65 include a multitude of gear wheels 64 linked to one another, each of which being fastened onto a shaft 67 of its own; one of these shafts is linked to fifth actuator means 66. Shafts 67 are reciprocally parallel and arranged on a plane that is brought to the longitudinal edges of basin 2.

Aerator means 8 include a multitude of ducts 70, each of which is fitted with at least one air discharge outlet 72. In the preferred embodiment, each duct 70 is obtained in a related shaft 67, which in this case is a hollow tube, and discharge outlets 72 are realized matching the free end of said shaft 67 according to a radial arrangement. Provision is made for first guide means 21 and second guide means 37 to be at right angles to shafts 67, so that stirring means 6 and aerator means 8 can be shifted along three axes perpendicular to one another. Actuator means 32, 51, 44, 58, 66 consist, each of them, of an electrically-, pneumatically- or hydraulically-driven rotary motor. Basin 2 is, for instance, made of reinforced concrete, has a rectangular shape and a longitudinal drainage conduct is built into the basin bottom. Basin 2 is, for instance, between 1.00 and 1.50 m deep, between 25 and 150 m long and between 5 and 20 m wide.

The plant also includes a roof intended to wholly cover basin 2 and protect it against meteoric rains.

Material 100 consists:
a) in its entirety, of components of vegetable origin such as straw, rice chaff, chopped portions of maize wastes, sunflower and wheat, wooden shavings, sawdust, and leaves, preferably a mix of these components, or
b) of components of vegetable origin mixed with components of organic origin; straw may, for instance, be got from stable litter and later mixed with organic components.

Provision is made for the plant to be entirely interlocked with electronic computing and control devices consisting of a PLC or a personal computer, capable of supervising phase relations at least among the bridge crane equipment 3, the trolley equipment 5, inlet means 4, stirring means 6, aerator means 8 and actuator means 32, 51, 44, 58, 66.

A manual operation mode is also possible.

Plant operation also includes operating bridge crane equipment 3 along basin 2 to uniformly scatter sewage onto material of vegetable origin 100 and running to and fro along the basin until the above-mentioned material 100 is fully impregnated with sewage.

Stirring means 6 and aerator means 8 are put inside the basin 2 and translate saddle 90, to which they are fastened, from a lifted condition A to a lowered condition B.

At this point stirring means 6 are set rotating by the fourth actuator means 66 to get the material of vegetable origin 100 mixed with sewage and forming a stirred homogeneous biomass.and reshuffle the latter. Aerator means 8 are linked to an appropriate generator and blow air into the biomass to help its dehydration and fermentation. During stirring and aeration operations, stirring means 6 and aerator means 8, integral with trolley equipment 5, are progressively translated along straight line directions over the whole extension of basin 2.

In a more precise manner, bridge crane device 3 is translated in an alternate motion along the whole length of basin 2 through stops and predefned-length advances; when bridge crane equipment 3 is advancing, trolley equipment 5 is stationary. The latter, in tum, is translated throughout the length of basin 2 during each stop by bridge crane equipment 3. Once bridge crane 3 has covered the whole length of basin 2, it can be translated to its initial position while, at the same time, letting in new sewage into the basin.

If necessary, the biomass stirring and aeration procedure can repeated one or several times. Stirring and aeration operations are stopped after a given time interval which is needed at least for a partial biomass degradation through enzymatic and biological degradation processes for at least a partial transformation of the biomass into a stable compost substance.

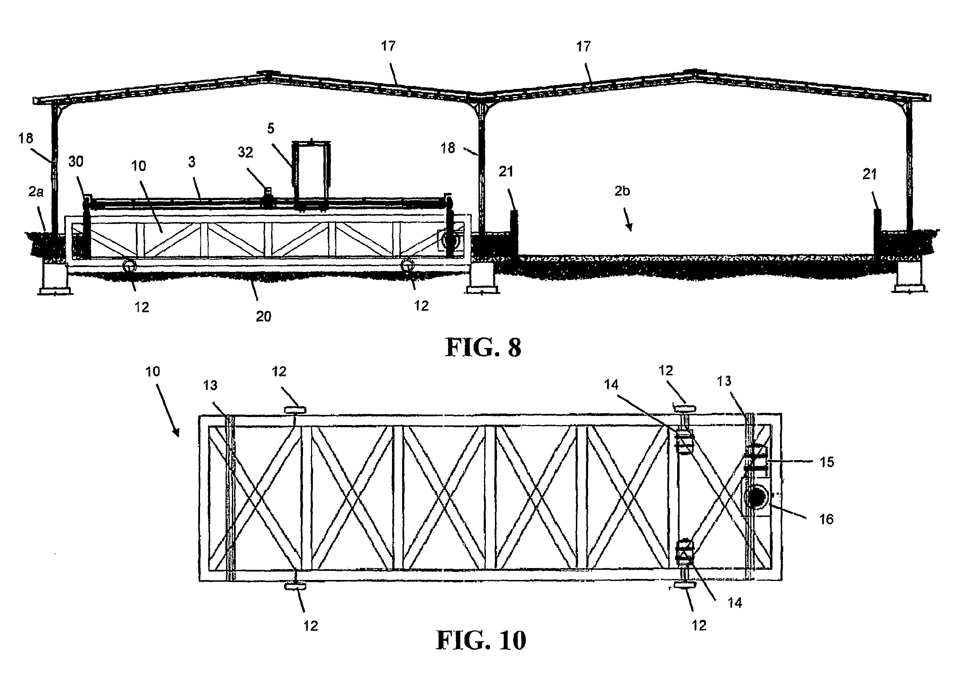

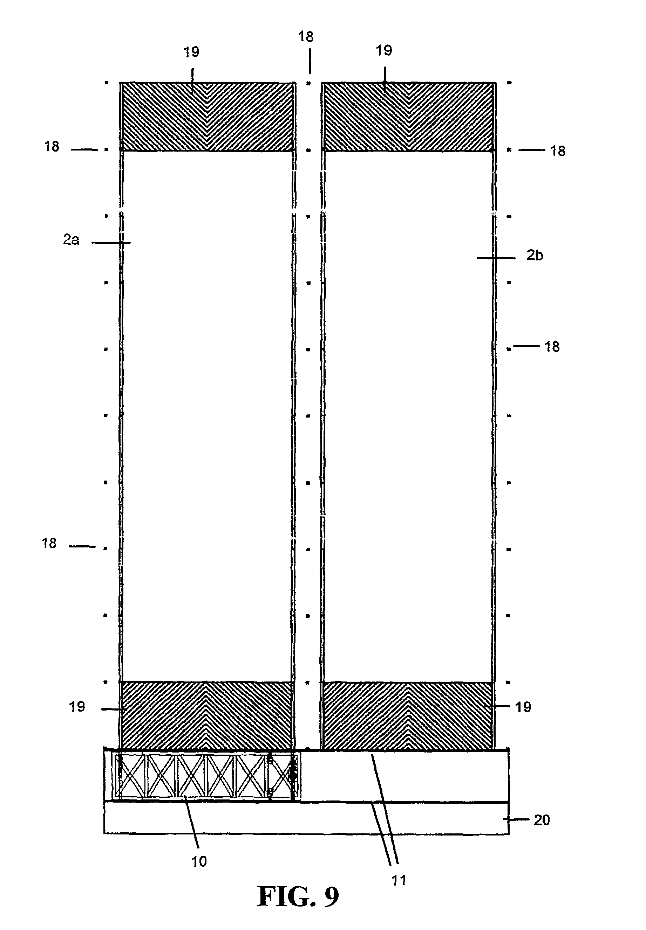

Figures 8 through 10 show a plant featuring several basins - which, for instance, could be arranged side-by-side, two of which, identified with 2a, 2b, are shown in the figure. In this case bridge crane 3, together with sewage inlet means (not shown in these figures) and trolley equipment 5, is installed on shifting means 10 that are shifted along third guide means 11, e.g. rails, fastened on a bedplate 20 extending in front the range of basins 2a and 2b and supporting a multitude of wheels 12 of shifting means 10 . Provision is made on the upper face of shifting means 10 for fourth guide means 13 to which wheels 30 of crane bridge equipment 3 are engaged. The movements of shifting means 10 are obtained with fifth actuator means 14, for instance a couple of electrically-, hydraulically- or pneumatically-driven motors coupled to two of wheels 12. Provision is also made for electric feed cable winding means 15 during movements of shifting means 10. Winding means 15 are driven by sixth actuator means 16.

Shelters 17, together witch their related supports 18 covering basins 2a and 2b, and stair flights 19 enabling access to collecting means for the treated sewage are also shown.

The invention's operation in the case for a plant featuring several basins can be immediately drawn from what is described above. Shifting means 10 together with bridge crane 3 are initially stationed connected to the first basin, e.g. basin 2a, fourth guide means 13 aligned with first guide means 21 of said basin. Bridge crane 3 is then shifted along basin 2a, and the above-described treatment cycle is carried out At the end of this cycle, bridge crane 3 is shifted back on shifting means 10 which are therefore shifted along third guide means 11 and brought to be connected with second basin 2b. When the treatment process in the second basin has been completed, operations will be continued in the same way for any subsequent basin.

The method for the treatment of zoo technical sewage, which is the subject of this invention, by means of a plant 1 including at least a basin 2, stirring means 6 and aerator means 8, makes provision for:
- letting into basin 2 material of vegetable origin 100 in a fragmentized form, or components of vegetable origin mixed with components of organic origin;
- providing an even scattering of said sewage on material 100 until the latter has been fully impregnated so that a biomass is obtained;
- imparting movement to the biomass through stirring means 6;
- aerating the biomass through aerator means 8;
- stopping the stirring and aeration operations after a given time interval, as needed until at least a partial biomass degradation through enzymatic and biological aerobic degradation processes has been achieved for at least a partial transformation of the biomass into a stable compost substance;
- extracting the said compost substance from basin 2.

This method makes provision for an even sewage scattering on material (100) all over the basin 2 extension to be periodically repeated for as many times as necessary, for instance, between one and three times per day. The biomass stirring and aeration operations are progressively carried out along straight-line directions over the whole extension of basin 2. The method makes provision for stirring and aerating operations on the biomass at the same time and to extract from basin 2 the compost substance after reaching a pre-defined dehydration value of the same substance.

In case several basins are used, this method is to be repeated identically for all basins. Provision is made, in order to obtain the material 100, to make use of such vegetable components as straw, rice chaff, chopped portions of maize, sunflower, wheat, wood shaving, sawdust and leaves; preferably a mix of such components, either combined or not, with materials of organic origin.

The main advantage of this invention is to provide a plant and a method for the treatment of zoo technical sewage while dispensing with lakes or extended sewage-collecting basins as well as extended ground plots with adequate features.

Another advantage is to provide a highly efficient and yield plant and cost-effective method allowing sewage to be processed without the use of additional chemical substances capable of converting the sewage into an amending stable mixed compost which can be immediately used for the fertilization of agricultural crops and is virtually smell-free.

## Claims

1. A plant for the treatment of zootechnical sewage including:
- at least one basin (2, 2a, 2b) intended to accommodate material to be treated;
- a bridge crane equipment (3), extending on top and transversally of the basin (2, 2a, 2b) and longitudinally movable along said basin (2, 2a, 2b);
- first stirring means (6) and aerator means (8) carried by a trolley (5) mounted on said bridge crane (3) for displacement transversally of the basin (2, 2a, 2b) on which, the bridge crane equipment (3) is located;
**characterised in that** said the bridge crane equipment (3) is fitted with sewage inlet means (4) arranged to uniformly scatter said sewage over one or more substances (100) of vegetable origin in fragmentised form, previously introduced into said at least one basin (2, 2a, 2b) possibly in combination with substances of organic origin, in order to uniformly scatter sewage on one or more substances (100) until it is fully impregnated with sewage; the stirring means (6) being adapted to cause the material (100) to be mixed with the sewage to form an homogeneous biomass; the aerator means (8) being adapted to blow air into the biomass to help it being dehydratated and fermented.

2. The plant according to claim 1, **characterised in that** it includes a roof (17) as a covering for the basin (2) or basins (2a, 2b).

3. The plant according to claim 1 or 2, **characterised in that** said sewage inlet means (4) includes at least one dispenser (41) with an elongated shape, it is fastened to a transverse edge of the bridge crane equipment (3) and it is internally fitted with second stirring means (42) to stir and discharge the sewage through a longitudinal opening (43) of said dispenser (41).

4. The plant according to claim 3, **characterised in that**, said dispenser (41) extends over substantially the whole width of said bridge crane equipment (3).

5. The plant according to claim 3 or 4, **characterised in that**, said second stirring means (42) includes a rotating axle equipped with a plurality of fins.

6. The plant according to claim 1, **characterised in that** said first stirring means (6) and said aerator means (8) are fastened to a saddle means (9), vertically slidable between a lifted condition (A) and a lower condition (B), in which said stirring means (7) and aerator means (8) are lifted from and lowered into the biomass respectively, in the at least one basin (2, 2a, 2b) where they are operating.

7. The plant according to claim 6, **characterised in that** said first stirring means (6) includes a set of rotatable shafts (67), each fitted with at least one blade (68).

8. The plant according to claim 7, **characterised in that** each shaft (67) includes a plurality of blades (68) helically arranged along said shaft (67).

9. The plant according to claim 7 or 8, **characterised in that** said shafts (67) are mutually parallel and arranged in a same plane parallel to longitudinal edges of said at least one basin (2, 2a, 2b).

10. The plant according to any of the preceding claims, **characterised in that** it includes a multitude of basins (2a, 2b), and **in that** said bridge crane equipment (3) is mounted on translating mans (10) arranged to sequentially bring said bridge crane, together with said sewage inlet means (4) and said trolley (5) in correspondence with each basin (2a. 2b).

11. The plant according to claim 1 or 10, **characterised in that** a longitudinal drain channel is built in the bottom of each basin (2, 2a, 2b).

12. The plant according to any preceding claim, **characterised in that** it comprises electronic computing and control equipment arranged to supervise the phase relations at least among said translating means (10), said bridge crane equipment (3), said trolley (5), said sewage inlet means (4), said first stirring means (6) and said aerator means (8).

13. The plant according to any of the preceding claims, **characterised in that** the substances of vegetable origin (100) include one or more out of straw, rice chaff, chopped portions of maize wastes, sunflower, wheat, wood shaving, sawdust and leaves.

14. A method for the biological treatment of zootechnical sewage in a plant as defined in claims 1-13 including at least one treatment basin (2, 2a, 2b) for receiving the materials to be treated, **characterised by** the combination of the following steps:
- introducing one or more substances (100) of vegetable origin in fragmentised form, possibly combined with substances of organic origin, into said at least one basin (2, 2a, 2b);
- evenly scattering sewage on said substance(s) (100) until the substances (100) are fully impregnated with the sewage;
- stirring the substances (100) and the sewage obtaining a biomass;
- aerating the biomass;
- stopping the biomass stirring and aeration operations after a time interval such that a partial biomass degradation takes place through enzymatic and biological aerobic degradation processes for an at least partial conversion of the biomass into a stable compost substances;
- extracting this compost substance from said at least one basin (2, 2a, 2b).

15. The method according to claim 14 for a plant including a plurality of basins (2, 2a, 2b), **characterised in that** the steps of introducing said substances, scattering the sewage, stirring and aerating the biomass, as well as extracting the biomass from the basin (2, 2a, 2b) are repeated sequentially for each basin.

16. The method according to claim 14 or 15, **characterised in that** the even scattering of sewage on said substance(s) (100) is periodically repeated, e,g, from one to three times a day.

17. The method according to any of claims from 14 to 16, **characterised in that** the compost substance is extracted from each basin (2, 2a, 2b) after a pre-established dehydration value has been attained for said compost substance.

18. The method according to any of claims 14 to 17, **characterised in that** one or more among one or more out of straw, rice chaff, chopped portions of maize wastes, sunflower, wheat, wood shaving and sawdust are used as substances of vegetable origin.

## Patentansprüche

1. Eine Anlage für die Behandlung von zootechnischem Abwasser umfassend:
- mindestens ein Becken (2, 2a, 2b), das vorgesehen ist, um zu behandelndes Material aufzunehmen,
- ein Brückenkrangerät (3), das sich oben auf und quer zu dem Becken (2, 2a, 2b) erstreckt und in Längsrichtung entlang des Beckens (2, 2a, 2b) bewegbar ist,
- erste Rührmittel (6) und Lüftermittel (8), die von einem Wagen (5) getragen werden, der auf dem Brückenkran (3) befestigt ist, um quer zu dem Becken (2, 2a, 2b) versetzt zu werden, auf dem das Brückenkrangerät (3) angeordnet ist,
**dadurch gekennzeichnet, dass** das Brückenkrangerät (3) ausgerüstet ist mit Abwassereinlassmitteln (4), die angeordnet sind, um das Abwasser gleichmäßig über eine oder mehrere Substanzen (100) pflanzlichen Ursprungs in fragmentierter Form zu verteilen, die vorher in das mindestens eine Becken (2, 2a, 2b) möglicherweise in Kombination mit Substanzen organischen Ursprungs eingeführt wurden, um Abwasser gleichmäßig auf eine oder mehrere Substanzen (100) zu verteilen, bis sie völlig mit Abwasser getränkt sind, während die Rührmittel (6) angepasst sind, um ein Mischen des Materials (100) mit dem Abwasser zu bewirken, um eine homogene Biomasse zu bilden, während die Lüftermittel (8) angepasst sind, um Luft in die Biomasse zu blasen, um beim Entwässern und Fermentieren der Biomasse zu helfen.

2. Die Anlage gemäß Anspruch 1, **dadurch gekennzeichnet, dass** sie ein Dach (17) als eine Abdeckung für das Becken (2) oder die Becken (2a, 2b) aufweist.

3. Die Anlage gemäß Anspruch 1 oder 2, **dadurch gekennzeichnet, dass** die Abwassereinlassmittel (4) mindestens eine Ausgabevorrichtung (41) mit einer verlängerten Form aufweisen, während sie an einem Querrand des Brückenkrangeräts (3) befestigt sind und sie innen mit zweiten Rührmitteln (42) ausgestattet sind, um zu rühren und das Abwasser durch eine Längsöffnung (43) der Ausgabevorrichtung (41) auszulassen.

4. Die Anlage gemäß Anspruch 3, **dadurch gekennzeichnet, dass** die Ausgabevorrichtung (41) sich im Wesentlichen über die gesamte Breite des Brückenkrangeräts (3) erstreckt.

5. Die Anlage gemäß Anspruch 3 oder 4, **dadurch gekennzeichnet, dass** die zweiten Rührmittel (42) eine Drehachse aufweisen, die mit einer Mehrzahl an Flügeln ausgestattet ist.

6. Die Anlage gemäß Anspruch 1, **dadurch gekennzeichnet, dass** die ersten Rührmittel (6) und die Lüftermittel (8) an Sattelmitteln (9) befestigt sind, die vertikal zwischen einem gehobenen Zustand (A) und einem unteren Zustand (B) schiebbar sind, in dem die Rührmittel (7) und Lüftermittel (8) entsprechend gehoben werden von und abgesenkt werden in die Biomasse in dem mindestens eine Becken (2, 2a, 2b) in dem sie betrieben werden.

7. Die Anlage gemäß Anspruch 6, **dadurch gekennzeichnet, dass** die ersten Rührmittel (6) einen Satz an drehbaren Wellen (67) umfassen, die jeweils mit mindestens einem Blatt (68) ausgerüstet sind.

8. Die Anlage gemäß Anspruch 7, **dadurch gekennzeichnet, dass** jede Welle (67) eine Mehrzahl an Blättern (68) aufweist, die helikal entlang der Welle (67) angeordnet sind.

9. Die Anlage gemäß Anspruch 7 oder 8, **dadurch gekennzeichnet, dass** die Wellen (67) zueinander parallel sind und in einer gleichen Ebene parallel zu Längsrändern des mindestens einen Beckens (2, 2a, 2b) angeordnet sind.

10. Die Anlage gemäß einem der vorhergehenden Ansprüche, **dadurch gekennzeichnet, dass** sie eine Vielzahl von Becken (2a, 2b) aufweist, sowie **dadurch**, dass das Brückenkrangerät (3) auf Bewegungsmitteln (10) angeordnet ist, die angeordnet sind, um den Brückenkran zusammen mit den Abwassereinlassmitteln (4) und dem Wagen (5) folgerichtig in Übereinstimmung mit jedem Becken (2a, 2b) zu bringen.

11. Die Anlage gemäß Anspruch 1 oder 10, **dadurch gekennzeichnet, dass** eine längs laufende Ablaufrinne in dem Boden jedes Beckens (2, 2a, 2b) ausgebildet ist.

12. Die Anlage gemäß einem der vorhergehenden Ansprüche, **dadurch gekennzeichnet, dass** sie elektronische Rechen- und Steuergeräte aufweist, die angeordnet sind, um eine Phasenbeziehung mindestens zwischen den Bewegungsmitteln (10), dem Brückenkrangerät (3), dem Wagen (5), den Abwassereinlassmitteln (4), den ersten Rührmitteln (6) und den Lüftermitteln (8) zu überwachen.

13. Die Anlage gemäß einem der vorhergehenden Ansprüche, **dadurch gekennzeichnet, dass** die Substanzen pflanzlichen Ursprungs (100) eine oder mehrere der folgenden umfassen:
Stroh, Reisspreu, gehackte Anteile von Maisabfällen, Sonnenblumen, Weizen, Holzspäne, Sägemehl und Blättern.

14. Ein Verfahren für die biologische Behandlung von zootechnischem Abwasser in einer Anlage gemäß Anspruch 1 bis 13, umfassend mindestens ein Behandlungsbecken (2, 2a, 2b) zum Aufnehmen des zu behandelnden Materials, **gekennzeichnet durch** die Kombination der folgenden Schritte:
- Einführen einer oder mehrerer Substanzen (100) pflanzlichen Ursprungs in fragmentierter Form, die möglicherweise mit Substanzen organischen Ursprungs kombiniert sind, in das mindestens eine Becken (2, 2a, 2b),
- gleichmäßiges Verteilen des Abwassers auf den Substanz(en) (100) bis die Substanzen (100) vollständig mit dem Abwasser getränkt sind,
- Rühren der Substanzen (100) und des Abwassers, um eine Biomasse zu erhalten,
- Belüften der Biomasse,
- Stoppen des Biomasseumrühr- und belüftungsbetriebs nach einem Zeitintervall, so dass ein teilweiser Biomasseabbau **durch** enzymatische und biologische aerobe Abbauprozesse für eine mindestens teilweise Umsetzung der Biomasse in eine stabile Kompostsubstanz stattfindet und
- Extrahieren dieser Kompostsubstanz von dem mindestens einen Becken (2, 2a, 2b).

15. Das Verfahren gemäß Anspruch 14 für eine Anlage umfassend eine Mehrzahl an Becken (2, 2a, 2b), **dadurch gekennzeichnet, dass** die Schritte Einführen der Substanzen, Verteilen des Abwassers, Rühren und Belüften der Biomasse sowie Extrahieren der Biomasse von dem Becken (2, 2a, 2b) folgerichtig für jedes Becken wiederholt werden.

16. Das Verfahren gemäß Anspruch 14 oder 15, **dadurch gekennzeichnet, dass** das gleichmäßige Verteilen von Abwasser auf den Substanz(en) (100) periodisch wiederholt wird, beispielsweise einmal bis dreimal am Tag.

17. Das Verfahren gemäß einem der Ansprüche 14 bis 16, **dadurch gekennzeichnet, dass** die Kompostsubstanz von jedem Becken (2, 2a, 2b) extrahiert wird, nachdem ein vorher festgesetzter Entwässerungswert für die Kompostsubstanz erreicht wurde.

18. Das Verfahren gemäß einem der Ansprüche 14 bis 17, **dadurch gekennzeichnet, dass** eine oder mehrere der folgenden Substanzen: Stroh, Reisspreu, gehackte Anteile von Maisabfällen, Sonnenblumen, Weizen, Holzspänen und Sägemehl als Substanzen pflanzlichen Ursprungs verwendet werden.

## Revendications

1. Usine de traitement d'effluents zootechniques, comprenant :
- au moins un bassin (2,2a, 2b) destiné à recevoir les matériaux à traiter ;
- un équipement de pont-grue (3) qui s'étend pardessus et transversalement au bassin (2, 2a, 2b) et est mobile longitudinalement le long dudit bassin (2,2a, 2b) ;
- des premiers moyens d'agitation (6) et des moyens d'aération (8) portés par un chariot (5) monté sur ledit pont-grue (3) pour se déplacer transversalement au bassin (2, 2a, 2b) sur lequel est situé l'équipement de pont-grue (3) ;
**caractérisée en ce que** ledit équipement de pont-grue (3) est équipé de moyens d'entrée d'effluents (4) ménagés pour épandre uniformément lesdits effluents sur une ou plusieurs substances (100) d'origine végétale sous forme fragmentée, précédemment introduites dans ledit au moins un bassin (2, 2a, 2b) éventuellement en combinaison avec des substances d'origine organique, afin d'épandre uniformément les effluents sur une ou plusieurs substances (100) jusqu'à ce qu'elle(s) soi(en)t complètement imprégnée(s) d'effluents ; les moyens d'agitation (6) étant adaptés pour amener le matériau (100) à se mélanger aux effluents afin de former une biomasse homogène ; les moyens d'aération (8) étant adaptés pour insuffler de l'air dans la biomasse afin de l'aider à se déshydrater et à fermenter.

2. Usine selon la revendication 1, **caractérisée en ce qu'**elle comprend un toit (17) comme recouvrement pour le bassin (2) ou les bassins (2a, 2b).

3. Usine selon la revendication 1 ou 2, **caractérisée en ce que** lesdits moyens d'entrée d'effluents (4) comprennent au moins un distributeur (41) de forme allongée, sont fixés à un bord transversal de l'équipement de pont-grue (3) et sont équipés intérieurement de seconds moyens d'agitation (42) pour agiter et décharger les effluents à travers une ouverture longitudinale (43) dudit distributeur (41).

4. Usine selon la revendication 3, **caractérisée en ce que** ledit distributeur (41) s'étend sur sensiblement toute la largeur dudit équipement de pont-grue (3).

5. Usine selon la revendication 3 ou 4, **caractérisée en ce que** lesdits seconds moyens d'agitation (42) comprennent un axe de rotation équipé d'une pluralité d'ailettes.

6. Usine selon la revendication 1, **caractérisée en ce que** lesdits premiers moyens d'agitation (6) et lesdits moyens d'aération (8) sont fixés à des moyens à chariot (9) qui peuvent coulisser verticalement entre un état soulevé (A) et un état abaissé (B), par lesquels lesdits moyens d'agitation (7) et lesdits moyens d'aération (8) sont soulevés de la biomasse ou abaissés dans celle-ci, respectivement, dans le au moins un bassin (2, 2a, 2b) où ils sont en service.

7. Usine selon la revendication 6, **caractérisée en ce que** les premiers moyens d'agitation (6) comprennent un ensemble d'arbres rotatifs (67), chacun équipé d'au moins une lame (68).

8. Usine selon la revendication 7, **caractérisée en ce que** chaque arbre (67) comprend une pluralité de lames (68) aménagées en hélice le long dudit arbre (67).

9. Usine selon la revendication 7 ou 8, **caractérisée en ce que** lesdits arbres (67) sont mutuellement parallèles et disposés dans un même plan parallèle aux bords longitudinaux dudit au moins un bassin (2, 2a, 2b).

10. Usine selon l'une quelconque des revendications précédentes, **caractérisée en ce qu'**elle comprend une multitude de bassins (2a, 2b) et **en ce que** ledit équipement de pont-grue (3) est monté sur des moyens de translation (10) disposés pour amener de manière séquentielle ledit pont-grue conjointement avec lesdits moyens d'entrée d'effluents (4) et ledit chariot (5) en correspondance avec chaque bassin (2a, 2b).

11. Usine selon la revendication 1 ou 10, **caractérisée en ce qu'**un canal de drainage longitudinal est construit au fond de chaque bassin (2, 2a, 2b).

12. Usine selon l'une quelconque des revendications précédentes, **caractérisée en ce qu'**elle comprend un équipement de calcul et de commande électronique aménagé pour superviser les relations de phase au moins parmi lesdits moyens de translation (10), ledit équipement de pont-grue (3), ledit chariot (5), lesdits moyens d'entrée d'effluents (4), lesdits premiers moyens d'agitation (6) et lesdits moyens d'aération (8).

13. Usine selon l'une quelconque des revendications précédentes, **caractérisée en ce que** les substances d'origine végétale (100) comprennent une ou plusieurs des substances suivantes : paille, balle de riz, parties hachées de déchets de maïs, tournesol, blé, copeaux de bois, sciure et feuilles.

14. Procédé pour le traitement biologique d'effluents zootechniques dans une usine telle que définie dans les revendications 1 à 13, comprenant au moins un bassin de traitement (2, 2a, 2b) destiné à recevoir les matériaux à traiter, **caractérisé par** la combinaison des étapes suivantes consistant à :
- introduire une ou plusieurs substances (100) d'origine végétale sous forme fragmentée, éventuellement en combinaison avec des substances d'origine organique, dans ledit au moins un bassin (2, 2a, 2b) ;
- épandre uniformément des effluents sur la ou lesdites substances (100) jusqu'à ce que les substances (100) soient complètement imprégnées des effluents ;
- agiter les substances (100) et les effluents pour obtenir une biomasse ;
- aérer la biomasse ;
- arrêter les opérations d'agitation et d'aération de la biomasse après un intervalle de temps tel qu'une dégradation partielle de la de biomasse se produise par des procédés de dégradation aérobie enzymatique et biologique pour assurer au moins une conversion partielle de la biomasse en substances de compost stables ; et
- extraire cette substance de compost dudit au moins un bassin (2, 2 a, 2b).

15. Procédé selon la revendication 14 pour une usine comprenant une pluralité de bassins (2, 2a, 2b), **caractérisé en ce que** les étapes d'introduction desdites substances, d'épandage des effluents, d'agitation et d'aération de la biomasse, ainsi que d'extraction de la biomasse du bassin (2, 2a, 2b) sont répétées en séquence pour chaque bassin.

16. Procédé selon la revendication 14 ou 15, **caractérisé en ce que** l'épandage uniforme des effluents sur la ou les substances (100) est répété de façon périodique, par exemple une à trois fois par jour.

17. Procédé selon l'une quelconque des revendications 14 à 16, **caractérisé en ce que** la substance de compost est extraite de chaque bassin (2, 2a, 2b) après qu'une valeur de déshydratation préétablie a été atteinte pour ladite substance de compost.

18. Procédé selon l'une quelconque des revendications 14 à 17, **caractérisé en ce qu'**une ou plusieurs des substances suivantes : paille, balle de riz, parties hachées de déchets de maïs, tournesol, blé, copeaux de bois, sciure et feuilles est ou sont utilisées comme substances d'origine végétale.
